# EUROPEAN PATENT APPLICATION

(11) **EP 4 113 313 A1**
(43) Date of publication of application: **04.01.2023**
(21) Application number: 20921354.5
(22) Date of filing: 27.02.2020
(51) Int. Cl.: G06F 16/182

(54) **CONTROL METHOD, INFORMATION PROCESSING DEVICE, AND CONTROL PROGRAM**

(71) Applicant: FUJITSU LIMITED, Kawasaki-shi, Kanagawa 211-8588 (JP)
(72) Inventor: SHINZAKI, Ryu, Kawasaki-shi, Kanagawa 211-8588 (JP); KOBAYASHI, Fumiya, Kawasaki-shi, Kanagawa 211-8588 (JP); ISHIHARA, Shun, Kawasaki-shi, Kanagawa 211-8588 (JP); HIRAMATSU, Junya, Kawasaki-shi, Kanagawa 211-8588 (JP); KUCHIWAKI, Yusuke, Kawasaki-shi, Kanagawa 211-8588 (JP)
(74) Representative: Hoffmann Eitle
(86) International application number: PCT/JP2020/007938
(87) International publication number: WO 2021/171457

(57) **Abstract**

In a method of controlling a database including an aggregate item for recording an aggregate value of transaction volume included in transaction data recorded in a blockchain, a computer executes a process of obtaining a plurality of the transaction data recorded in the blockchain, a process of specifying, for each of a plurality of second users who are transaction partners with a first user associated with the aggregate item, a transaction time with the first user on the basis of the plurality of transaction data, a process of classifying the plurality of second users into a plurality of groups on the basis of dissimilarity of the transaction time, and a process of generating the aggregate item for each of the groups in the database, thereby suppressing a conflict in database updating.

## Description

### FIELD

The present invention relates to a control method, an information processing apparatus, and a control program.

### BACKGROUND

Each block recorded in a distributed ledger as data included in a blockchain is generated for each predetermined unit such as every fixed time interval, every fixed number of transactions, or the like. Therefore, information regarding a plurality of transactions may be included in one block.

Note that a transaction indicates, for example, remittance from a transactor of a remittance source to a transactor of a remittance destination in a case of a virtual currency transaction, and the transactor of the remittance source (e.g., user A), the transactor of the remittance destination (e.g., user B), a remittance amount, and the like are used as parameters. In such a transaction, a database that manages identification information of a balance of each transactor (e.g., "balance of A") as a key and a numerical value indicating the balance as a value is updated. In the case of the remittance transaction from the user A to the user B, the remittance amount is subtracted from the value corresponding to the key "balance of A", and the remittance amount is added to the value corresponding to the key "balance of B".

### SUMMARY

### TECHNICAL PROBLEM

Updating of the database based on multiple transactions included in the same block is carried out collectively. Therefore, in a case where multiple transactions for which the value for the same key is to be updated are included in the same block, a conflict may occur among the multiple transactions, and the value of the key may not be consistent. In view of the above, in the case where multiple transactions for which the value for the same key is to be updated are included in the same block, only the first transaction of the multiple transactions is executed, and execution of the second and subsequent transactions is suppressed as an error.

In this case, re-execution of the transactions whose execution has been suppressed is needed, which cause a delay in executing the transactions. Moreover, even when the transactions are re-executed, the same situation may occur in the block at the time of the re-execution.

In view of the above, in one aspect, the present invention aims to suppress a conflict in database updating.

### SOLUTION TO PROBLEM

In one proposal, in a method of controlling a database including an aggregate item for recording an aggregate value of transaction volume included in transaction data recorded in a blockchain, a computer executes a process of obtaining a plurality of the transaction data recorded in the blockchain, a process of specifying, for each of a plurality of second users who are transaction partners with a first user associated with the aggregate item, a transaction time with the first user on the basis of the plurality of transaction data, a process of classifying the plurality of second users into a plurality of groups on the basis of dissimilarity of the transaction time, and a process of generating the aggregate item for each of the groups in the database.

### ADVANTAGEOUS EFFECTS OF INVENTION

According to one aspect, it becomes possible to suppress a conflict in database updating.

### BRIEF DESCRIPTION OF DRAWINGS

FIG. 1 is a diagram illustrating an exemplary configuration of a transaction management system 1 according to an embodiment of the present invention.
FIG. 2 is a diagram illustrating an exemplary hardware configuration of each node 10 included in the transaction management system 1 according to the embodiment of the present invention.
FIG. 3 is a diagram illustrating an exemplary functional configuration of each node 10 included in the transaction management system 1 according to the embodiment of the present invention.
FIG. 4 is a flowchart for explaining an exemplary processing procedure of a key dividing process.
FIG. 5 is a diagram illustrating an exemplary time-series aggregation result of the number of transactions for each unit time for each of other users based on a transaction history H.
FIG. 6 is a diagram illustrating an exemplary clustering result of other users.
FIG. 7 is a diagram illustrating exemplary classification of other users into groups.
FIG. 8 is a flowchart for explaining an exemplary processing procedure of an updating process of a balance DB 161 executed after division of a balance key.

### DESCRIPTION OF EMBODIMENTS

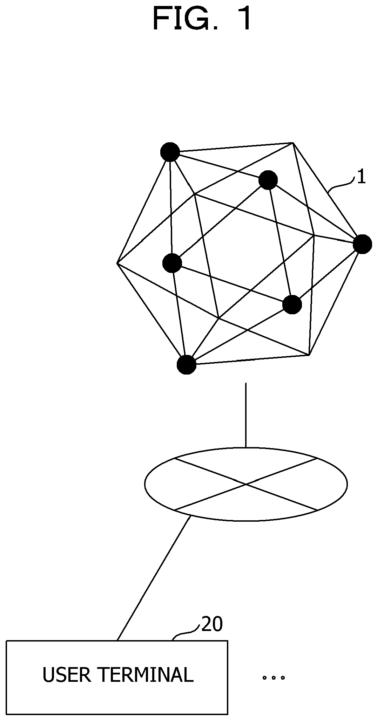

Hereinafter, an embodiment of the present invention will be described with reference to the drawings. FIG. 1 is a diagram illustrating an exemplary configuration of a transaction management system 1 according to the embodiment of the present invention. In FIG. 1, a plurality of user terminals 20 is connected to the transaction management system 1 via a network such as the Internet or the like.

The user terminals 20 are terminals to be used by parties (users of a remittance source and users of a remittance destination (hereinafter simply referred to as "users")) to various transactions (hereinafter simply referred to as "transactions"), such as remittance and the like. For example, a personal computer (PC), a smartphone, a tablet terminal, or the like may be used as the user terminal 20.

The transaction management system 1 is a peer-to-peer (P2P) network (blockchain network) that manages transactions performed between the user terminals 20, and includes a plurality of computers or a set of information processing apparatuses (nodes 10) to which distributed ledger technology is applied. Each of the nodes 10 is connected by the blockchain network, and includes a storage unit (hereinafter referred to as "ledger") that distributes and manages common ledger information. A blockchain that indicates a transaction history is recorded in the ledger. For example, the transaction management system 1 may be achieved by using framework implementation such as Hyperledger Fabric or the like.

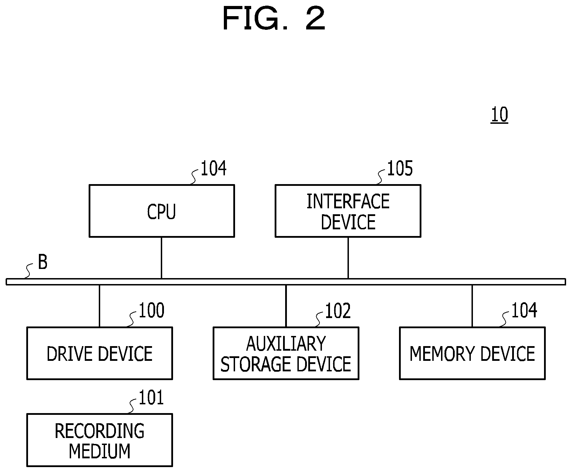

FIG. 2 is a diagram illustrating an exemplary hardware configuration of each of the nodes 10 included in the transaction management system 1 according to the embodiment of the present invention. Each of the nodes 10 includes a drive device 100, an auxiliary storage device 102, a memory device 103, a CPU 104, an interface device 105, and the like, which are mutually connected by a bus B.

A program that implements processing in the node 10 is provided by a recording medium 101. When the recording medium 101 recording the program is set in the drive device 100, the program is installed in the auxiliary storage device 102 from the recording medium 101 via the drive device 100. However, the program is not necessarily installed from the recording medium 101, and it may be downloaded from another computer via the network. The auxiliary storage device 102 stores the installed program, and also stores files, data, and the like that are needed.

The memory device 103 reads the program from the auxiliary storage device 102 and stores it when an instruction to activate the program is issued. The CPU 104 executes a function related to the node 10 in accordance with the program stored in the memory device 103. The interface device 105 is used as an interface for connecting to the network.

Note that examples of the recording medium 101 include a portable recording medium such as a compact disc read only memory (CD-ROM), a digital versatile disc (DVD), a universal serial bus (USB) memory, or the like. Furthermore, examples of the auxiliary storage device 102 include a hard disk drive (HDD), a flash memory, and the like. Both the recording medium 101 and the auxiliary storage device 102 correspond to a computer-readable recording medium.

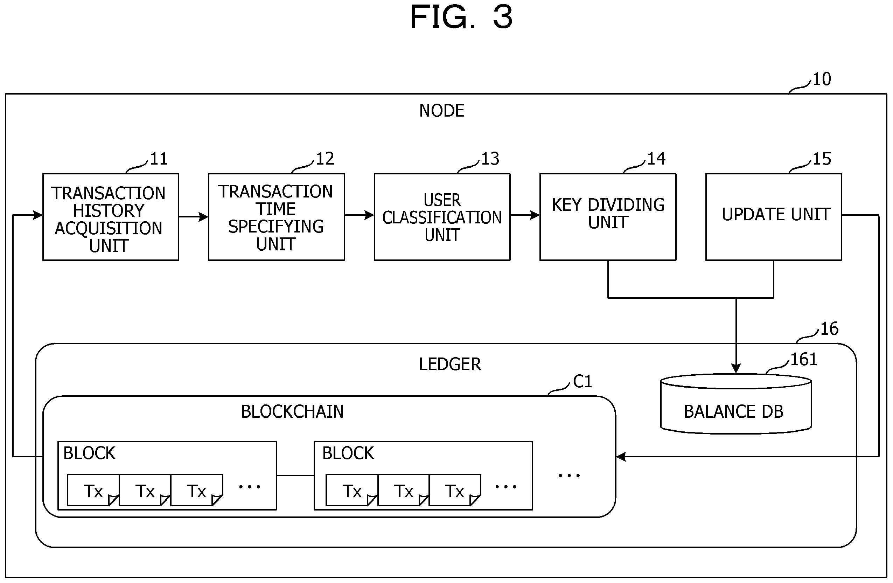

FIG. 3 is a diagram illustrating an exemplary functional configuration of each of the nodes 10 included in the transaction management system 1 according to the embodiment of the present invention. As illustrated in FIG. 3, each of the nodes 10 uses a storage unit such as a ledger 16. The ledger 16 may be implemented by using, for example, the auxiliary storage device 102, a storage device that can be connected to the node 10 via the network, or the like.

As described above, the ledger 16 is a storage unit for each of the nodes 10 to distribute and manage common ledger information. The ledger 16 stores a blockchain C1, a balance database (DB) 161, and the like.

The blockchain C1 is an ordered list of blocks. Each of the blocks stores data (hereinafter referred to as "transaction data") including individual parameters for each of one or more transactions that has occurred in a predetermined unit such as every fixed time interval, every fixed number of transactions, or the like. In the present embodiment, remittance between the users will be described as an exemplary transaction. Therefore, for example, the transaction data includes a remittance date and time, a user name of a remittance source, a user name of a remittance destination, a remittance amount, and the like.

The balance DB 161 is a database including an aggregate item for recording an aggregate value (balance of each user) of a transaction volume (transaction amount) between the users. A value of the aggregate item (aggregate value) corresponding to the balance of each user is updated by transaction execution. In other words, the remittance amount is subtracted from the balance of the user of the remittance source, and the remittance amount is added to the balance of the user of the remittance destination. Note that the balance of each user is stored in the balance DB 161 in a key-value format. The aggregate item of the balance corresponds to a key, and the aggregate value corresponds to a value. In other words, the balance DB 161 stores, for each user, a numerical value indicating a balance in association with a key for identifying the balance of the user (e.g., "balance of A"). However, the balance DB 161 may be a database other than the key-value store such as a relational database (RDB) or the like. For example, when the balance DB 161 is an RDB, an item name "balance of A" corresponds to the key, and a value of the item "balance of A" corresponds to the value.

Here, in a case where multiple transaction data accessing the same key are included in one block, each transaction associated with transaction data other than the first transaction data fails due to a conflict (collision) in execution of each transaction associated with the multiple transaction data. In order to avoid such a conflict, in the present embodiment, dividing the key in which the conflict is likely to occur into a plurality of keys will be considered. Specifically, dividing the key "balance of A" into a "balance of food expenses of A" and a "balance of utility expenses of A" will be considered. With this arrangement, among the transactions that update the "balance of A", a value of the "balance of food expenses of A" is to be updated in a case of a transaction of updating the balance of the food expenses of the user A, and a value of the "balance of utility expenses of A" is to be updated in a case of a transaction of updating the utility expenses of the user A. As a result, the keys to be updated are distributed, whereby a decrease in access frequency for the same key may be expected. Therefore, avoidance of a conflict of access to the same key may be expected.

However, in this case, an effect of reducing the number of conflicts of access to the same key is considered to be small in a case where most of the transactions for the "balance of A" are originally the transactions corresponding to the key "balance of food expenses of A", for example. Furthermore, the user needs to divide and carry out the transactions according to the divided key, and as a result, the number of transactions increases.

In view of the above, each of the nodes 10 according to the present embodiment includes a transaction history acquisition unit 11, a transaction time specifying unit 12, a user classification unit 13, a key dividing unit 14, an update unit 15, and the like to make it possible to avoid the problem described above. Each of those units is implemented by a process that one or more programs installed in the node 10 cause the CPU104 to execute. For example, each of the units may be implemented by a process that a smart contract (chain code in the case of Hyperledger Fabric) causes the CPU 104 to execute.

The transaction history acquisition unit 11 obtains, for each user, a set of transaction data (transaction data in which the user is the remittance source or the remittance destination) stored in any block of the blockchain C1 in a latest fixed period T1 in the past. The transaction time specifying unit 12 specifies, for each user, the transaction time of each user who is a transaction partner with the user in chronological order for each unit time T2 obtained by subdividing the fixed period T1. The user classification unit 13 classifies, for each user, individual users who are transaction partners with the user into a plurality of groups on the basis of dissimilarity of the transaction time with the user. The key dividing unit 14 generates, for each user, a key (aggregate item) for aggregating the transaction balance of the user for each group classified for the user, thereby substantially dividing the key. The update unit updates the balance DB 161 on the basis of the transaction data.

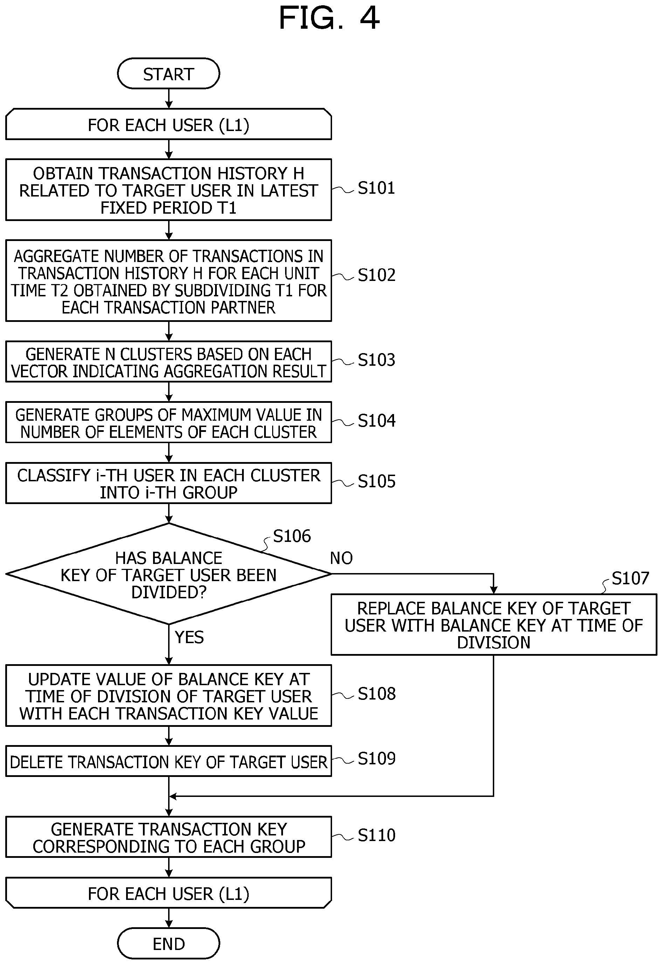

Hereinafter, a processing procedure executed by each of the nodes 10 will be described. FIG. 4 is a flowchart for explaining an exemplary processing procedure of the key dividing process. Note that the processing procedure of FIG. 4 is repeatedly executed at intervals of the fixed period T1. The fixed period T1 may be the same as the cycle in which a new block connected to the blockchain C1 is generated. In this case, the processing procedure of FIG. 4 may be executed in response to generation of a new block.

First, a loop process L1 including steps S101 to S110 is executed for each user who is a candidate for a transaction. The user targeted for the process in the loop process L1 will be referred to as a "target user".

In step S101, the transaction history acquisition unit 11 obtains, from the blockchain C1, a set of transaction data (hereinafter referred to as "transaction history H") corresponding to the target user among the transaction data stored in any block of the blockchain C1 in the latest fixed period T1 in the past. The transaction data corresponding to the target user indicates transaction data in which the target user is the remittance source or the remittance destination (i.e., transaction data that cases the balance of the target user to be updated). Therefore, for example, in a case where the user A is the target user, the user A is the remittance source or the remittance destination, and a set of transaction data in the latest fixed period T1 is obtained as the transaction history H.

Subsequently, the transaction time specifying unit 12 aggregates, in chronological order, the number of transaction data (i.e., the number of transactions) in the transaction history H for each unit time T2 obtained by subdividing the fixed period T1 for each of users (hereinafter referred to as "other users") who is a transaction partner with the target user (S102).

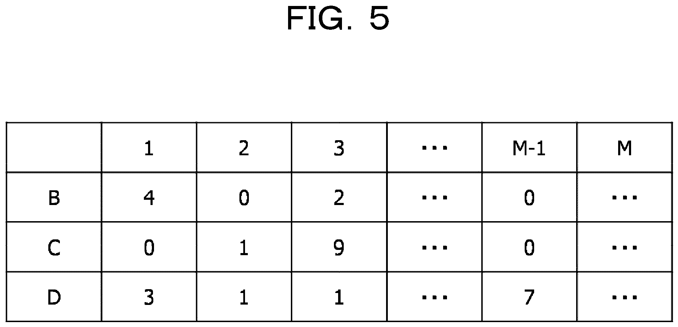

FIG. 5 is a diagram illustrating an exemplary time-series aggregation result of the number of transactions for each unit time for each of other users based on the transaction history H. In FIG. 5, the first row is a row given for convenience to indicate what number unit time each unit time is. In the example of FIG. 5, an exemplary case where the fixed period T1 is divided into M unit times is illustrated.

Each column of each row of the second and subsequent rows indicates an aggregation result of the number of transactions in each time period corresponding to each column for each of other users. From the aggregation result of FIG. 5, it is possible to specify the transaction time with the target user for each of the plurality of other users other than the target user. Note that each row for each of other users may be regarded as a vector with a length M in which the aggregate value of each unit time is an element. Hereinafter, the vector will be referred to as a "aggregate value vector".

Subsequently, the user classification unit 13 clusters the plurality of other users by a publicly known method on the basis of the similarity of the individual aggregate value vectors of the plurality of other users to generate N clusters (S103). In other words, the plurality of other users is classified into a plurality of (N) clusters g1 to gN. The similarity of the aggregate value vectors may be evaluated by, for example, a degree of similarity of the aggregate value vectors. A publicly known index such as cosine similarity or the like may be used as the similarity.

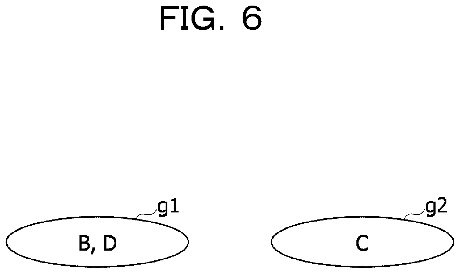

FIG. 6 is a diagram illustrating an exemplary clustering result of other users. FIG. 6 illustrates an exemplary case where users B and D are classified into a cluster g1 and a user C is classified into a cluster g2. This indicates that transactions between A and B and transactions between A and D tend to occur in the same time period (i.e., prone to a conflict).

Subsequently, the key dividing unit 14 generates groups G1 to Gk of the maximum value k in the number of elements of each of the N clusters generated by the user classification unit 13 (S104). In the example of FIG. 6, the number of elements (number of users) of the cluster g1 = 2 is the maximum. Therefore, in this case, two groups of a group G1 and a group G2 are generated.

Subsequently, the key dividing unit 14 classifies the i-th (1 ≤ i ≤ k) user of other users in each cluster into the i-th group Gi (S105). Therefore, other users who do not have similar transaction time with each other are classified into the same group. In other words, in step S105, other users are classified into a plurality of groups on the basis of the dissimilarity of the transaction time.

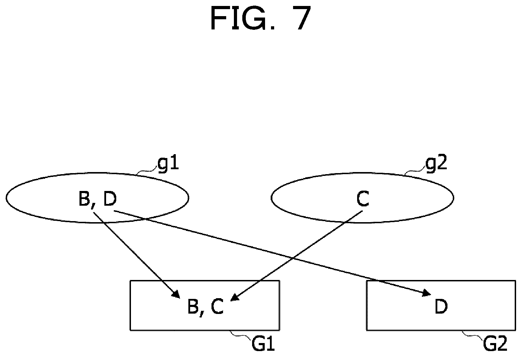

FIG. 7 is a diagram illustrating exemplary classification of other users into groups. FIG. 7 illustrates an exemplary case where the users B and C are classified into the same group (group G1) and the user D is classified into another group (group G2).

Subsequently, the key dividing unit 14 determines whether or not the dividing process of the key corresponding to the balance of the target user (hereinafter referred to as "balance key") has been executed in the past (S106). In other words, it is determined whether or not step S107 has been executed for the target user. This determination method will be described later.

If the dividing process of the balance key of the target user has not been executed (No in S106), the key dividing unit 14 replaces the key name of the balance key of the target user in the balance DB 161 with "<user name of the target user>-balance at the time of division" (S107). Here, the user name of the target user is entered in <user name of the target user>. Therefore, in a case where the user A is the target user, the key name of the key "balance of A" in the balance DB 161 is replaced with "A-balance at the time of division". The key "A-balance at the time of division" is a key for retaining the value of the balance key at the time of dividing the balance key of the user A (i.e., how much the balance of the user A was at the time of the key division). Hereinafter, the key related to the key name after the replacement will be referred to as a "balance key at the time of division".

Subsequently, the key dividing unit 14 generates, for each group generated in step S104, a transaction key corresponding to the group in the balance DB 161 (S110). At this time, the value corresponding to each generated transaction key is initialized to 0. Here, the transaction key corresponding to the group indicates a key with a value of the aggregate value of transactions between the target user and a user belonging to the group. For example, the transaction key corresponding to the group G1 is a key with a value of the transaction amount between the user A and the user B or the aggregate value of the transaction amount between the user A and the user C. In the present embodiment, it is assumed that the key name of the transaction key corresponding to the group G1 is "A-B, C", and the key name corresponding to the group G2 is "A-D". In other words, the key name of the transaction key has a format of "user name of the target user-user name of other users". In other words, before "-" indicates the user name of the target user, and after"-" indicates the user name of one or more other users who are the transaction partners with the target user. The value (transaction amount) of such a transaction key is deducted by the remittance amount according to the remittance from the user with the user name before "-", and the remittance amount is added according to the remittance from the user with the user name after "-" to the user. For example, in the case of the value (transaction amount) of the key "A-D", the remittance amount is subtracted according to the remittance from the user A to D, and the remittance amount is added according to the remittance from the user D to A. In other words, the transaction key is a key with the value of the aggregate value of the transaction volume after the balance key is divided. Furthermore, which key value is to be updated by each transaction may be identified by a key name. In other words, the key name of the transaction key includes correspondence information between the user related to the transaction and the key to be updated. However, a character string not including such correspondence information (e.g., "first transaction of A", "second transaction of A", etc.) may be used as a key name of the transaction key. In this case, correspondence information indicating that the key "first transaction of A" is a key corresponding to the transaction between A and B or A and C and the key "second transaction of A" is a key corresponding to the transaction between A and D may be separately stored in the auxiliary storage device 102 or the like.

On the other hand, if it is determined in step S106 that the dividing process of the balance key of the target user has been executed (Yes in S106), steps S108 and S109 are executed instead of step S107. Note that, as described above, the key name of the balance key of the user for whom step S107 is executed is replaced with "<user name of the target user>-balance at the time of division". Therefore, the determination in step S106 may be made on the basis of the presence or absence of the balance key of the target user at the time of division.

In step S108, the key dividing unit 14 updates the value of the balance key of the target user at the time of division with the value of each transaction key of the target user. Specifically, the key dividing unit 14 adds the value of each transaction key of the target user to the value of the balance key of the target user at the time of division. For example, in a case where the target user is the user A and the transaction key of the user A is as described above, the value of the key "A-B, C" and the value of the key "A-D" are added to the value of the key "A-balance at the time of division". As a result, a result of the transaction between the user A and another user after the previous generation of the transaction key of the user A is reflected in the balance key of the user A at the time of division.

Subsequently, the key dividing unit 14 deletes all the transaction keys of the target user and the values corresponding to the transaction keys from the balance DB 161 (S109). Subsequently, with step S110 executed, the balance key of the target user is to be divided again.

Steps S101 to S110 described above are executed for all users, and when the loop process L1 is complete, the execution of the processing procedure of FIG. 4 is terminated.

With the processing procedure of FIG. 4 repeatedly (every fixed period T) executed, the key for managing the balance of each user may be changed as follows.

For example, as described above, when the transaction between A and B and the transaction between A and C are likely prone to a conflict after the key "balance of A" is divided into the key "A-balance at the time of division", the key "A-B, C", and the key "A-D", the processing procedure of FIG. 4 is executed again (S108 and S109 are executed at this time), whereby the keys related to the user A are divided again as follows.
- Key "A-balance at the time of division"
- Key "A-B"
- Key "A-C"
- Key "A-D"

In other words, even in a case where updating of a certain key value is found to be prone to a conflict later, the key may be subdivided into smaller pieces. Therefore, in the example described above, it becomes possible to suppress a conflict between the transaction between A and B and the transaction between A and C.

On the other hand, in a case where the transaction between A and B, the transaction between A and C, and the transaction between A and D are unlikely prone to a conflict, the processing procedure of FIG. 4 is executed again, whereby the keys related to the user A are divided again as follows.
- Key "A-balance at the time of division"
- Key "A-B, C, D"

In other words, in a case where the keys that are unlikely prone to a conflict are divided into a plurality of pieces, the keys may be recombined. In the example described above, the transaction keys between the user A and other users are ultimately combined into one. As a result, the number of readings for aggregation of the balance of the user A may be reduced, and the average processing time may be suppressed.

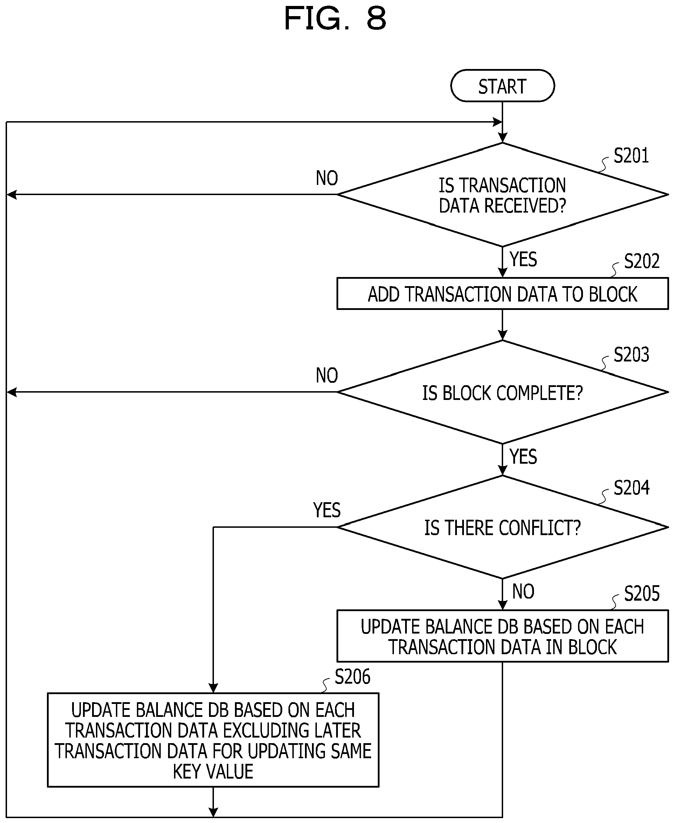

Next, an updating process of the balance DB 161 executed after division of the balance key will be described. FIG. 8 is a flowchart for explaining an exemplary processing procedure of the updating process of the balance DB 161 executed after division of the balance key.

When the update unit 15 receives new transaction data (request to update the key value of the transaction data) (Yes in S201), it adds the transaction data (hereinafter referred to as "target transaction data") to the end of the block currently being generated (S202). Subsequently, the update unit 15 determines whether or not the target block is complete (S203). For example, it is determined whether or not the target block is complete depending on whether the elapsed time from the start of generation of the target block has reached a certain time, whether the number of transaction data contained in the target block is equal to or more than a certain number, or the like.

If the target block is not complete (No in S203), the process returns to step S201. If the target block is complete (Yes in S203), the update unit 15 determines whether or not there is an update conflict in the target block (S204). In other words, it is determined, for the target block, whether or not there is a plurality of transaction data for which the value of the same key is to be updated.

If there is no update conflict (No in S204), the update unit 15 updates the key value of the balance DB 161 on the basis of each transaction data in the target block (S205). At this time, for each transaction data, the value (aggregate value) of the transaction key of the user of the remittance source in the transaction data and the value (aggregate value) of the transaction key of the user of the remittance destination in the transaction data are updated on the basis of the remittance amount (transaction volume) of the transaction data. Specifically, the remittance amount is subtracted from the value of the transaction key of the user of the remittance source, and the remittance amount is added to the value of the transaction key of the remittance destination. For example, in the case of remittance from the user A to the user B, the remittance amount is subtracted from the value of the key "A-B^{∗}" (^{∗} indicates a user name of zero or more other than the user A), and the remittance amount is added to the value of the key "B-A^{∗}" (^{∗} indicates a user name of zero or more other than the user B).

On the other hand, if there is an update conflict (Yes in S204), the update unit 15 updates the value of the key in the balance DB 161 on the basis of each transaction data excluding the later transaction data that updates the value of the same key in the target block (S206). In other words, the transaction related to the later transaction data that updates the value of the same key fails. Subsequent to step S205 or S206, the process returns to step S201.

Note that, in the present embodiment, an update conflict is expected to be suppressed by the execution of the processing procedure of FIG. 4, whereby it becomes possible to suppress the execution of step S206 (i.e., transaction failure).

As described above, according to the present embodiment, for each user, the transaction time is specified for each transaction partner with the user on the basis of past transaction data related to the user, a transaction partner group is classified into a plurality of groups on the basis of dissimilarity of the transaction time, and a key (aggregate item) for each group is generated in the balance DB 161. Therefore, aggregation related to transactions between users with a similar transaction time is carried out using different keys (aggregate items). As a result, it becomes possible to suppress a conflict in updating the database (balance DB 161).

Note that the node 10 is an exemplary information processing apparatus in the present embodiment. The balance DB 161 is an exemplary database. The transaction history acquisition unit 11 is an exemplary acquisition unit. The transaction time specifying unit 12 is an exemplary specifying unit. The user classification unit 13 is an exemplary classification unit. The key dividing unit 14 is an exemplary generation unit.

### CITATION LIST

### PATENT DOCUMENT

Patent Document 1: International Publication Pamphlet No. WO 2018/124297

### REFERENCE SIGNS LIST

1 Transaction management system
10 Node
11 Transaction history acquisition unit
12 Transaction time specifying unit
13 User classification unit
14 Key dividing unit
15 Update unit
16 Ledger
20 User terminal
100 Drive device
101 Recording medium
102 Auxiliary storage device
103 Memory device
104 CPU
105 Interface device
161 Balance DB
B Bus
C1 Blockchain

## Claims

1. A control method implemented by a computer configured to control a database that includes an aggregate item that records an aggregate value of transaction volume included in transaction data recorded in a blockchain, the control method comprising:
obtaining a plurality of the transaction data recorded in the blockchain;
specifying, for each of a plurality of second users who are transaction partners with a first user associated with the aggregate item, a transaction time with the first user on a basis of the plurality of transaction data;
classifying the plurality of second users into a plurality of groups on a basis of dissimilarity of the transaction time; and
generating the aggregate item for each of the groups in the database.

2. The control method according to claim 1, wherein
the classifying of the plurality of second users includes:
classifying the plurality of second users into a plurality of clusters on a basis of similarity of the transaction time; and
classifying the second users into the plurality of groups in such a manner that the second users each classified into the same cluster are not included in the same group.

3. The control method according to claim 2, wherein
the specifying of the transaction time includes aggregating, for each of the plurality of second users, a number of transactions with the first user for each unit time in chronological order on the basis of the plurality of transaction data, and
the classifying of the plurality of second users includes classifying the plurality of second users into the plurality of clusters on a basis of similarity of an aggregation result of the number of transactions for each unit time.

4. The control method according to any one of claims 1 to 3, further comprising:
updating an aggregate value of the aggregate item that corresponds to the group to which the second user, who is the transaction partner with the first user in the transaction data, belongs on a basis of the transaction volume included in the transaction data recorded in the blockchain after generation of the aggregate item for each of the groups.

5. An information processing apparatus configured to control a database that includes an aggregate item that records an aggregate value of transaction volume included in transaction data recorded in a blockchain, the information processing apparatus comprising:
an acquisition unit that obtains a plurality of the transaction data recorded in the blockchain;
a specifying unit that specifies, for each of a plurality of second users who are transaction partners with a first user associated with the aggregate item, a transaction time with the first user on a basis of the plurality of transaction data;
a classification unit that classifies the plurality of second users into a plurality of groups on a basis of dissimilarity of the transaction time; and
a generation unit that generates the aggregate item for each of the groups in the database.

6. The information processing apparatus according to claim 5, wherein
the classification unit classifies the plurality of second users into a plurality of clusters on a basis of similarity of the transaction time, and classifies the second users into the plurality of groups in such a manner that the second users each classified into the same cluster are not included in the same group.

7. The information processing apparatus according to claim 6, wherein
the specifying unit aggregates, for each of the plurality of second users, a number of transactions with the first user for each unit time in chronological order on the basis of the plurality of transaction data, and
the classification unit classifies the plurality of second users into the plurality of clusters on a basis of similarity of an aggregation result of the number of transactions for each unit time.

8. The information processing apparatus according to any one of claims 5 to 7, further comprising:
an update unit that updates an aggregate value of the aggregate item that corresponds to the group to which the second user, who is the transaction partner with the first user in the transaction data, belongs on a basis of the transaction volume included in the transaction data recorded in the blockchain after generation of the aggregate item for each of the groups.

9. A control program comprising instructions which, when executed by a computer configured to control a database that includes an aggregate item that records an aggregate value of transaction volume included in transaction data recorded in a blockchain, cause the computer to perform processing, the processing comprising:
obtaining a plurality of the transaction data recorded in the blockchain;
specifying, for each of a plurality of second users who are transaction partners with a first user associated with the aggregate item, a transaction time with the first user on a basis of the plurality of transaction data;
classifying the plurality of second users into a plurality of groups on a basis of dissimilarity of the transaction time; and
generating the aggregate item for each of the groups in the database.

10. The control program according to claim 9, wherein
the classifying of the plurality of second users includes:
classifying the plurality of second users into a plurality of clusters on a basis of similarity of the transaction time; and
classifying the second users into the plurality of groups in such a manner that the second users each classified into the same cluster are not included in the same group.

11. The control program according to claim 10, wherein
the specifying of the transaction time includes aggregating, for each of the plurality of second users, a number of transactions with the first user for each unit time in chronological order on the basis of the plurality of transaction data, and
the classifying of the plurality of second users includes classifying the plurality of second users into the plurality of clusters on a basis of similarity of an aggregation result of the number of transactions for each unit time.

12. The control program according to any one of claims 9 to 11, further comprising:
updating an aggregate value of the aggregate item that corresponds to the group to which the second user, who is the transaction partner with the first user in the transaction data, belongs on a basis of the transaction volume included in the transaction data recorded in the blockchain after generation of the aggregate item for each of the groups.
